# EUROPEAN PATENT SPECIFICATION

(11) **EP 2 315 492 B1**
(45) Date of publication and mention of the grant of the patent: **21.10.2015**
(21) Application number: 09306003.6
(22) Date of filing: 22.10.2009
(51) Int. Cl.: H04W 72/00, H04W 36/06, H04W 88/06

(54) **Method for enhancing the use of radio resource, user equipment and network infrastructure for implementing the method**
Verfahren zur Verbesserung der Verwendung einer Funkressource, Teilnehmergerät und Netzinfrastruktur zum Umsetzen des Verfahrens
Procédé d'amélioration de l'utilisation de ressources radio, équipement utilisateur et infrastructure de réseau pour la mise en oeuvre du procédé

(43) Date of publication of application: 27.04.2011
(73) Proprietor: ALCATEL LUCENT, 92100 Boulogne-Billancourt (FR)
(72) Inventor: Fauconnier, Denis, 78141 Velizy (FR); Boumendil, Sarah, 75008 Paris (FR)
(74) Representative: Wetzel, Emmanuelle

(56) References cited:
- WO-A1-2008/050958
- MOTOROLA: "UE RF Aspects of Standalone Carrier for E-MBMS" 3GPP DRAFT; R4-060929, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. Tallinn; 20060825, 25 August 2006 (2006-08-25), XP050176030 [retrieved on 2006-08-25]
- MOTOROLA: "Standalone Carrier for MBMS" 3GPP DRAFT; R2-062347-STANDALONE-MBMS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Tallinn; 20060823, 23 August 2006 (2006-08-23), XP050131939 [retrieved on 2006-08-23]
- IPWIRELESS: "E-MBMS operation in diverse spectrum allocations" 3GPP DRAFT; R1-050933, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. London, UK; 20050825, 25 August 2005 (2005-08-25), XP050100552 [retrieved on 2005-08-25]
- "Universal Mobile Telecommunications System (UMTS); Feasibility study on improvement of the Multimedia Broadcast / Multicast Service (MBMS) in UTRAN ( 3GPP TR 25.905 version 7.2.0 Release 7); ETSI TR 125 905" ETSI STANDARDS, LIS, SOPHIA ANTIPOLIS CEDEX, FRANCE, vol. 3-R2, no. V7.2.0, 1 January 2008 (2008-01-01), XP014040452 ISSN: 0000-0001

## Description

The present invention relates to a method for enhancing the use of radio resource, a user equipment and network infrastructure for implementing the method.

The increasing demand over the last years from wireless users for video and multimedia services has fostered the development of specific service offers such as the Multimedia broadcast/multicast service (MBMS) and Integrated Mobile Broadcast (IMB) for third-generation wireless networks.

An example of third-generation wireless network is the Universal Mobile Telecommunication System (UMTS), which is specified by the Third Generation Partnership Program (3GPP). All 3GPP technical specifications for the UMTS system can be obtained at the following URL address: http://www.3gpp.org/Specification-Numbering. The UMTS is specified for two distinct duplex modes, frequency division duplex (FDD) and time division duplex (TDD), in accordance with the spectrum allocated for the UMTS technology by the International Telecommunication Union - Radiocommunications (ITU-R). The first commercial deployments, in the early 2000 years, of UMTS systems mostly concerned the FDD mode, which for a number of years has been viewed as the nominal mode of UMTS. However, a number of national spectrum allocation regulators had granted UMTS licenses to operators which included spectrum dedicated to the FDD mode as well as spectrum dedicated to the TDD mode. Operators were then in a situation where they were licensed for operating a UMTS system (in TDD mode) in a certain frequency spectrum (most often a single 5 MHz band) which essentially remained unused at first.

The term "frequency band" as used herein refers to any set of adjacent radio frequencies, an example of which is a range of radio frequencies spanning from one frequency *f_{inf_bound}* to another, distinct frequency *f_{sup_bound},* wherein *f*_{inf_}*_{bound} < f*_{sup*_bound.*}

The terms "radio terminal", "user equipment" and "mobile station" as used herein are interchangeable, and refer to any type of fixed or mobile (or portable) communication terminal capable of exchanging data with a radio-communication network on a radio communication link. Consequently, it may be, among other things, a telephone or desktop computer connected to a local router or server and equipped with a radio communication interface; a mobile telephone; a laptop computer or personal digital assistant (or PDA) equipped with a radio communication interface; a server or local router equipped with a radio communication interface.

In FDD duplex mode, a frequency band is dedicated to each direction of the communication: one band for the uplink direction (from the mobile station to the radio access network), and one band for the downlink direction (from the radio access network to the mobile station). This spectrum allocation of two carrier frequencies for both directions is referred to as paired spectrum. A guard band defines a minimum spacing between the two paired frequency bands so as to avoid any overlapping between the two streams and minimize mutual interferences. In TDD mode, the uplink and downlink signals share the same frequency band by way of a time multiplex arrangement. A guard time can also be defined between a time period allocated to uplink communications and an adjacent time period allocated to downlink communications so as to avoid any overlapping between the two streams and minimize mutual interferences. This spectrum allocation of a single carrier frequency for both directions is referred to as unpaired spectrum. Unpaired spectrum is particularly well suited for so-called asymmetrical services, i.e. services where transmission rates required for the uplink signal and the downlink signal are unbalanced.

Broadcast services are an example of such asymmetrical services, as they require a high transmission rate on the downlink (e.g. for transmission of video in streaming mode), and little if not any transmission rate on the uplink. Broadcast is a transmission mode in which a source transmits data without specifying addressees of the transmitted data. Broadcast is sometimes viewed as the "opposite" of unicast transmission mode, as unicast involves the transmission of data from a source to one (point-to-point) or several (point-to-multipoint) addressees (identified by their respective address in the network or other identification information). Broadcast is also characterized by the fact that there is little or no "return" communication channel, i.e. the network nodes receiving the broadcast data do not send any or almost any data back to the broadcast source.

The MBMS technology was developed and specified for providing multimedia services to mobile users in broadcast and multicast modes, as a component of a UMTS FDD system. In contrast, IMB is a technology developed for delivering broadcast services to mobile users, which uses TDD duplex mode. IMB is indeed defined as part of the 3GPP Release 8 Standard, as a component of the specified UTRA TDD mode. One of its main advantage is to be ready for deployment under the already licensed TDD frequency bands, therefore putting an end to the under usage of licensed TDD spectrum while allowing operators to spread the demand for broadband services over an increased capacity infrastructure network which operates on both paired and unpaired spectrum.

In Europe, a total spectrum of 155 MHz has been allocated for UMTS applications, and the portion of this total spectrum that each operator has been licensed for is at minimum 2 x 10 MHz of paired spectrum, and 5 MHz of unpaired spectrum. Knowing that 5MHz is the minimum separation distance allowed between two UMTS carriers (given the chip rate of 3,84 Mc/s), each UMTS carrier occupies a frequency band of 5 MHz. In some configurations, a TDD frequency band may be located in-between two FDD frequency bands, or may be adjacent to only one FDD frequency band. Such configuration may correspond to the frequency planning adopted by an operator for its radio access infrastructure network, with an objective to deploy broadcast services in the unpaired spectrum.

Frequency spectrum operating bands are described in the 3GPP technical specification TS 25.104 for the FDD mode, and in the 3GPP technical specification TS 25.105, V8.5.0, entitled "Base Station (BS) radio transmission and reception (TDD) (Release 8)", published by the 3GPP in September 2009, for the TDD mode. For example, the operating band I for UMTS FDD spans from 1920 MHz to 1980 MHz for the uplink direction, and from 2110 MHz to 2170 MHz for the downlink direction. For TDD, one of the frequency bands in which the UTRAN/TDD is designed to operate in spans from 1900 to 1920 MHz and from 2010 to 2025 MHz, in each case for both downlink and uplink transmissions. Further detailed information may be found in Section 5.2 of the 3GPP technical specification TS 25.104, V8.8.0, entitled "Base Station (BS) radio transmission and reception (FDD) (Release 8)", published by the 3GPP in September 2009 and in Section 5.2 of the above-mentioned 3GPP Technical Specification 25.105, V8.5.0.

The foregoing provides an example of a FDD frequency band and a TDD frequency band which are adjacent with a common boundary (in the example 1920 MHz), and the possibility of having adjacent TDD and FDD frequency bands in a deployment scenario of an operator is addressed in the technical specification TS25.105: Section 6.6 of this specification is directed to so-called out of band emissions, defined as emissions immediately outside the channel bandwidth resulting from the modulation process. Out of band emissions may also create reception issues at the mobile terminals when the two frequency bands do not have a common boundary but are adjacent in the sense that they are spaced apart by a guard band which is small in view of the mobile terminal ability to reject the out of band emissions.

Mobile users may want to concurrently receive services provided on radio channels carried on carrier frequencies in unpaired spectrum (e.g. broadcast services) and use services provided on radio channels carried on carrier frequencies in paired spectrum (e.g. unicast services, such as data or voice services), the paired and unpaired spectrum being adjacent to each other as described above. This may lead to adjacent radio channel interference issues, also referred to as radio-frequency co-existence issues, which result in the concurrent use for a mobile user of both services being impossible or strongly impaired.

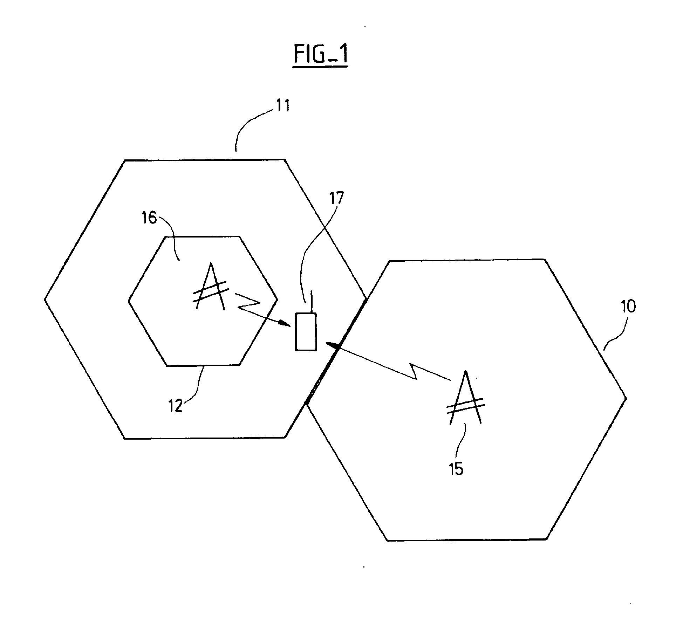

Figure 1 illustrates a situation wherein the RF co-existence issue may be encountered. Shown on figure 1 are three cells 10, 11, 12 which correspond to the radio coverage of two base stations 15, 16. The two base stations 15, 16 are part of a UMTS radio access network and are operating according the UMTS TDD and FDD technologies, respectively. Assuming that the radio access network operator has deployed unicast services in the 2100 MHz (from 1920 MHz to 1980 MHz for the uplink direction, and from 2110 MHz to 2170 MHz for the downlink direction) and 900 MHz FDD band, and IMB services in the 2100 MHz TDD band (from 1900 to 1920 MHz and from 2010 to 2025 MHz), and according to one possible radio frequency planning setup, the cells 11 and 12 may provide radio coverage for unicast services in the 900 MHZ and in the 2100 MHz FDD frequency bands, respectively, while the cell 10 may provide radio coverage for IMB services in the 2100 MHz TDD frequency band. In such a case, the user equipment 17, located in between the cells 10 and 12, may suffer the consequences of the RF co-existence issue existing between the two cells 10 and 12, operating in adjacent frequency bands, although on different duplex technologies.

Document WO2008/050958 A1 discloses methods and apparatus to minimize conflicts caused by simultaneous unicast and broadcast transmission/reception in a mobile communication device. The mobile communication device selects a technology for the reception of a broadcast/multicast/unicast service and then disables the use of specific technologies or the use of a specific technology on a specific frequency band that might interfere with the reception of another service.

An object of the present invention is to improve the situation of mobile terminals with respect to the actual or potential occurrence of an RF-coexistence issue.

According to the present invention, a method as set forth in claim 1, a user equipment module as set forth in claim 5, a base station as set forth in claim 10, a computer program product as set forth in claim 11 and a machine readable medium as set forth in claim 12 are provided. Embodiments of the invention are claimed in the dependent claims.

In the present disclosure a method is provided for enhancing the use of radio resource allocated to data communication between user equipments and a radio access network infrastructure. The radio access network infrastructure comprises at least a base station and is adapted for operating in first and second frequency bands for providing respective first and second services to user equipments. The method comprises the steps of, preferably with regard to a user equipment adapted for using simultaneously said first and second services: detecting an actual or potential occurrence of a radio-frequency co-existence issue between the radio transmissions for said first and second services, and transmitting information regarding the detected radio-frequency co-existence issue.

According to one aspect the first and second services are provided on different radio duplex technologies (for instance Time Division Duplex and Frequency Division Duplex) in respective first and second frequency bands.

In an aspect the first service is provided in unicast mode on paired spectrum, and the second service is provided in broadcast mode on unpaired spectrum.

In an aspect, the step of detecting an actual or potential occurrence of a radio-frequency co-existence issue between the radio transmissions of the first and second services includes a step of comparing a distance between said first and second frequency bands with a threshold.

Alternatively, the step of detecting an actual or potential occurrence of a radio-frequency co-existence issue between the radio transmissions for said first and second services may include, with regard to a user equipment which is using the first service, a step of detection of a deterioration of radio reception quality for the first service. Such detection may for example be implemented, further to a step of initiating the use of the second service concurrently with the use of the first service, by detecting that the use of the second service concurrently with the use of the first service is either impossible or severely impaired.

In yet another aspect, the step of detecting an actual or potential occurrence of a radio-frequency co-existence issue between the radio transmissions for said first and second services may include, with regard to a user equipment which is using the first service, and further to a step of initiating the use of the second service concurrently with the use of the first service, a step of detecting that the use of the second service concurrently with the use of the first service is either impossible or severely impaired.

The radio access network infrastructure may comprise several base stations operated by an operator which distributed the first and second services provided to its network users in respective frequency bands. Alternatively, the radio access network infrastructure may reflect a network sharing situation between several operators, in which case it comprises at least a base station which provides at least one of the first and second services to network users on behalf of both operators. Three subsets can be identified in the radio access network infrastructure in a typical network sharing configuration between two operators: one subset operated by the first operator, another subset operated by the second operator, and a third subset operated by both operator to provide at least one of the first and second services to their respective subscribers.

Another aspect relates to a user equipment module for enhancing the use of radio resource allocated to data communication between user equipments and a radio access network infrastructure which comprises at least a base station and is adapted for operating in first and second frequency bands for providing respective first and second services to user equipments, the user equipment module comprising controller means, radio-frequency circuit means and antenna means. The controller means are adapted for detecting an actual or potential occurrence of a radio-frequency co-existence issue between the radio transmissions for said first and second services, and transmitting information regarding the detected radio-frequency co-existence issue to the radio access network infrastructure. They may also be further adapted for generating said information before transmission to the radio access network.

In an aspect, the controller means are coupled with memory means, and are further adapted for detecting an actual or potential occurrence of a radio-frequency co-existence issue by fetching from the memory means a radio-frequency co-existence threshold, and comparing a distance between said first and second frequency bands with the threshold.

In another aspect, the controller means are further adapted for, when the user equipment is using the first service, detecting a deterioration of radio reception quality for the first service. An exemplary embodiment is provided by controller means which are further adapted for operating the radio-frequency circuit means and antenna means for initiating the use of the second service concurrently with the use of the first service, and detecting that the use of the second service concurrently with the use of the first service is either impossible or severely impaired.

In yet another aspect, the controller means are further adapted for, when the user equipment is using the first service, operating the radio-frequency circuit means and antenna means for initiating the use of the second service concurrently with the use of the first service, and detecting that the use of the second service concurrently with the use of the first service is either impossible or severely impaired.

In yet another aspect, the invention provides a user equipment which comprises such a user equipment module.

As the user equipment is the only entity in the operator's network which can dynamically detect the occurrence of an RF co-existence issue, the UE can inform the network of such occurrence so that corrective actions may be taken. This is especially the case for broadcast services (e.g. MBMS) for which the network is not aware that the UE is intending or attempting to receive the service. In particular, when a UE intends to concurrently receive broadcast and unicast services, it will have the knowledge that it intends to receive a broadcast service concurrently with another service, and will be the node that may experience the RF co-existence issue between the radio transmissions for both services. The foregoing provides an example of circumstances in which the UE is in an advantageous position to inform the network of a potential or actual RF co-existence issue.

While the information regarding a detected radio-frequency co-existence issue may be carried in a message requesting from a network such a corrective action, the message to the network may also be merely informative.

Corrective actions that may be taken at the radio access network infrastructure level include a handover of at least one of the communications to transfer it on a different carrier frequency with which there is no RF co-existence issue.

Yet another aspect relates to a base station equipment in a radio access network adapted for operating in first and second frequency bands for providing respective first and second services to user equipments, comprising a digital processing module, a radio-frequency processing module, and a controller module, wherein the digital processing module is adapted for receiving and processing information regarding a radio-frequency co-existence issue received from a user equipment, and transmitting such information to the controller module.

The controller module may be further adapted for, upon reception of information regarding a radio-frequency co-existence issue for a user equipment with which a communication is pending, triggering from the radio-frequency processing module a reconfiguration of the pending communication to switch it to a different carrier frequency.

The disclosure also proposes a computer program product for implementing a method in accordance with embodiments of the invention, when the program is loaded and run on a computer means.

The disclosure also proposes a machine readable medium that contains computer executable instructions for performing a method in accordance with embodiments of the invention.

The disclosure also proposes a machine readable medium that contains computer executable instructions for, when the computer executable instructions are executed by a processor, performing a method for enhancing the use of radio resource allocated to data communication between user equipments and a radio access network infrastructure, wherein the radio access network infrastructure comprises at least a base station and is adapted for operating in first and second frequency bands for providing respective first and second services to user equipments, comprising first computer executable instructions for detecting an actual or potential occurrence of a radio-frequency co-existence issue between the radio transmissions for said first and second services, and second computer executable instructions for transmitting information regarding the detected radio-frequency co-existence issue.

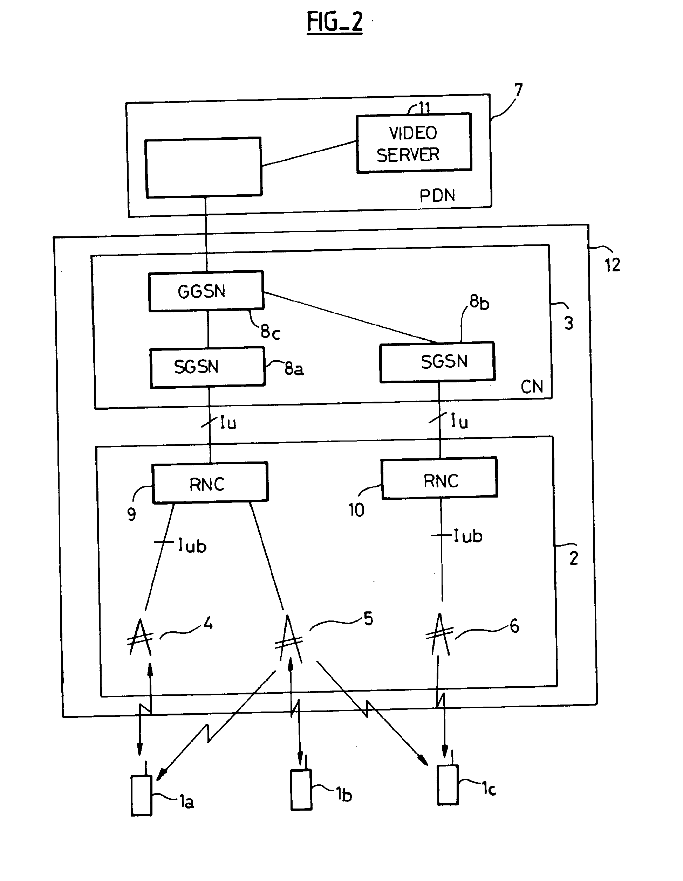

Other features and advantages of the present invention will become apparent in the following description of non-limiting exemplary embodiments, with reference to the appended drawings, in which Figure 2 is a block diagram of a system suitable for implementing the invention.

Mobile stations 1a, 1b, 1c communicate with a radio-communication network 12, comprising a radio access network 2 having a plurality of base stations 4-5-6, and a core network 3 capable of transmitting data. Although the invention can take place in any system having such entities, it will be described hereinafter in its non-limiting application to third-generation radio communication networks of the UMTS type ("Universal Mobile Telecommunication System"), the radio access network of which comprising nodes operating in FDD ("Frequency Division Duplex") mode and nodes operating in TDD ("Time Division Duplex") mode, without restricting the scope of the disclosure.

As shown in Figure 2, the switches of the mobile service 8a, 8b, 8c, belonging to the core network (CN) 3, are linked on the one hand to one or more fixed networks 7 and on the other hand, by means of an interface known as lu, to control equipments 9, 10, or radio network controllers (RNC). Each RNC 9, 10 is linked to one or more base stations 4, 5, 6 by means of an interface known as lub. The base stations 4, 5, 6, distributed over the network's coverage territory, are capable of communicating by radio with the mobile terminals 1a, 1b, 1c called UEs ("User Equipment"). The base stations 4, 5, 6, also called "Node B", may each serve one or more cells by means of respective transceivers. Certain RNCs 9, 10 can also communicate with one another by means of an interface known as lur. The RNCs and the base stations form an access network known as a "UMTS Terrestrial Radio Access Network" (UTRAN) 2. The core network 3 comprises interconnected switches called SGSN ("Serving GPRS Support Nodes") 8a, 8b, some of which being connected to the UTRAN, and GGSN ("Gateway GPRS Support Node") 8c. The GGSN 8c is a gateway for interfacing the UMTS network with external data networks 7, e.g. an IP ("Internet Protocol") network.

The UMTS uses the CDMA spread spectrum multiple access technique, meaning that the symbols transmitted are multiplied by spreading codes consisting of samples known as "chips" whose rate (3.84 Mchip/s in the case of UMTS) is greater than that of the transmitted symbols. The spreading codes distinguish between various physical channels PhCH which are superimposed on the same transmission resource constituted by carrier frequency. The auto- and cross-correlation properties of the spreading codes enable the receiver to separate the PhCHs and to extract the symbols intended for it.

For the UMTS in the FDD mode, on the downlink direction (transmissions from a Node-B to a User Equipment), a scrambling code is allocated to each Node-B, and various physical channels used by this Node-B are distinguished by mutually orthogonal "channelization" codes. For each PhCH, the global spreading code is the product of the "channelization" code and the scrambling code of the base station. The spreading factor (equal to the ratio of the chip rate to the symbol rate) is a power of 2 lying between 4 and 512. This factor is chosen as a function of the bit rate of the symbols to be transmitted on the PhCH. The various physical channels obey a frame structure in which 10 ms frames follow one another on the FDD carrier frequency used by the base station. Each frame is subdivided into N = 15 time slots of 666 µs. Each slot can carry the superimposed contributions of one or more physical channels, comprising common channels and dedicated channels DPCH ("Dedicated Physical CHannel").

The UTRAN comprises elements of layers 1 and 2 of the ISO model with a view to providing the links required on the radio interface (called Uu), and a stage for controlling the radio resources (RRC, "Radio Resource Control") belonging to layer 3, as is described in the 3G TS 25.301 technical specification "Radio Interface Protocol" version 7.4.0 published in March 2008 by the 3GPP. In view of the higher layers, the UTRAN acts simply as a relay between the UEs and the core network. Layers 1 and 2 are each controlled by the RRC sublayer, whose characteristics are described in the TS 25.331 technical specification "RRC Protocol Specification", version 7.9.1 published in August 2008 by the 3GPP. The RRC stage supervises the radio interface, and also processes streams to be transmitted to the remote station according to a "control plan", as opposed to the "user plan" which corresponds to the processing of the user data arising from layer 3.

Returning to Figure 2, the UTRAN 2 comprises a sub-network with an RNC 10 and a Node-B 6, operating in TDD mode, for delivering broadcast services to UEs 1a, 1b, 1c. In the external packet data network 7, the video server 11 is arranged for providing services in broadcast mode (such as mobile TV) to UEs 1c having corresponding subscriptions. The services rendered can be of various types. In the following, we will more particularly consider services of the family referred to as IMB ("Integrated Mobile Broadcast"), which is currently developed and standardized by the 3GPP. A description of its architecture and functionalities can be found in the 3GPP technical specifications for the TDD mode, as IMB was specified as an integral part of the TDD mode for UMTS. Other nodes (Node-Bs 4, 5 and RNC 9) in the UTRAN 2 are operating in FDD mode, and providing *inter-alia* unicast services on FDD carrier frequencies to the UEs 1a, 1b, 1c. The UE 1c is multi-mode IMB/FDD-WCDMA, in the sense that it is adapted to for simultaneously handling communications with the IMB infrastructure and with the FDD-WCDMA infrastructure. Although Figure 2 illustrates an exemplary embodiment in which the Node-Bs 6 operating in TDD mode for providing IMB broadcast services are distinct from the Node-Bs 4, 5 operating in FDD mode for providing unicast services (such as HSPA services), dual-mode Node-Bs operating both in FDD and TDD modes may be considered .

It should be noted that the exemplary embodiments described herein may also be implemented with a LTE network, or with UMTS/LTE dual mode UEs serviced by a radio access network which combines nodes of a UTRAN and nodes of an LTE RAN. More generally, the term "radio access network" as used herein is not limited to a specific multiple access scheme or technology, and may comprise several radio access sub-network, each being of a specific type, e.g. UMTS, GSM, LTE, WiMAX, etc. This scenario can be envisioned as the LTE is designed as the evolution of 3G UMTS, and also because the architecture of a typical LTE network (as will be described here-below) is somewhat similar to the one of a UMTS network. A typical LTE network also comprises a core network, called "Evolved Packet Core" (EPC), which is linked on the one hand to one or more packet data networks (e.g. IP networks) and on the other hand, by means of a logical interface referred to as the S1 interface, to a radio access network called E-UTRAN (Evolved Universal Terrestrial Radio Access Network). A single node, called eNode-B (or eNB) has been specified as the network element of an E-UTRAN. The eNBs are distributed over the territory covered by the E-UTRAN, and are each capable of communicating by radio (on the air interface) with mobile terminals also called UE in the LTE jargon, through respective radio coverage areas also referred to as cells. The logical interface between eNBs and UEs is also referred to as the *Uu* interface. The eNBs are interconnected to form a mesh-type network, and communicate with each other by means of a logical interface referred to as the X2 interface. One may consider schematically that the features of the UMTS radio access network Node-B and RNC nodes have been embedded in a single E-UTRAN node which is the eNB. The Evolved UTRAN also comprises elements of layers 1 and 2 of the ISO model, such as a physical layer for layer 1, and a medium access control (MAC) layer, a radio link control (RLC) layer, and a packet data convergence protocol (PDCP) layer for layer 2, with a view to providing the links required on the radio interface Uu. It also comprises a stage for controlling the radio resources (RRC, "Radio Resource Control") belonging to layer 3, as is described in the 3GPP TS 36.331 technical specification "Evolved Universal Terrestrial Radio Access (E-UTRA) Radio Resource Control (RRC); protocol specification (Release 8)", version 8.4.0, published in December 2008 by the 3GPP.

It should also be noted that the present description could likewise be transposed to a network configuration based on a UTRAN that utilizes both TDD and FDD spectrum wherein the TDD frequency band(s) are used for providing HSPA services in the downlink direction (the corresponding uplink direction being provided on the FDD spectrum portion of the UTRAN), instead of, or in addition to, broadcast services such as IMB. In such a configuration, the UTRAN provides FDD communication to UEs using dual carrier/four carrier HSDPA through additional downlink carrier(s) which are deployed in the TDD bands.

The UTRAN 2 network planning is such that an RF co-existence issue may occur between the carrier frequency used by the Node-B 5 operating in FDD mode and the carrier frequency used by the Node-B 6 operating in TDD mode, and be experienced by the user of the UE 1c when attempting to receive both IMB broadcast flow from the IMB Node-B 6 and a unicast flow from the Node-B 5 operating in FDD, in view of the performances of the radio-frequency receiver module(s) of the UE 1c . Indeed, for a given UTRAN 2 network planning, the UE 1c may not be designed so that the radio-frequency filters are able to efficiently filter out all RF co-existence interference signals thereby making it insensitive to the RF co-existence issue.

Upon detection of an RF coexistence issue between a unicast service carrier frequency (Node-B 5) and a broadcast service carrier frequency (Node-B 6), the UE 1c can send to the access network 2 a message informing the access network of the RF coexistence issue it experiences. In response to receiving this message, the access network may reconfigure the broadcast service and/or the unicast service so that they are provided on different carrier frequencies than those for which the RF coexistence issue exists.

Preference might be given to a reconfiguration of the unicast service, as a reconfiguration of the broadcast service would impact all user equipments listening to the broadcast, whereas reconfiguration of the unicast service will only impact the UE 1 c, which is what is eventually aimed for if such reconfiguration leads to the UE 1 c being able to listen to the broadcast flow while completing a unicast communication with the UTRAN 2.

The following describes several situations where the UE 1c can benefit from sending to the infrastructure network 2 information related to the actual or a potential occurrence of a RF coexistence issue.

A first example is provided by the situation wherein the UE is receiving a broadcast service using a TDD carrier frequency in a band for which there is (in the operator's frequency planning) a RF co-existence issue with a FDD frequency band used by the operator. If the UE receives a paging request for initiating a communication from the FDD infrastructure network on a FDD carrier frequency in this conflicting FDD frequency band, this may result in the UE not receiving anymore the broadcast service, if the UE radio-frequency receivers are not performing well enough to render the UE insensitive to the RF co-existence issue between the conflicting frequency bands. In case of a broadcast service interruption the broadcast service may resume only at the end of the unicast communication on the conflicting FDD carrier frequency. In this situation, the UE may detect the RF coexistence issue upon reception of the paging request, as the paging request, sent on the conflicting FDD carrier frequency, may in itself reveal the RF co-existence issue (resulting in an deterioration of the reception quality for the broadcast service at the UE, or even an interruption of reception of the broadcast service at the UE). Then the UE can, for example in its response to the paging message, or in addition to it, send information to the infrastructure network which originated the paging regarding the occurrence of an RF co-existence issue with the FDD carrier frequency that was selected for the paging message. Upon receiving this message, the infrastructure network may or may not take action. If it does, it can reconfigure the connection, so that the unicast communication is eventually setup on a FDD carrier frequency different from the conflicting one. That is, it can trigger an inter-frequency handover to transfer the communication being setup to a FDD carrier frequency different from the conflicting one. The result of the inter-frequency handover will be that the UE will be able to simultaneously receive the broadcast and unicast traffic.

A different situation that may occur is the one wherein the UE is receiving (or transmitting) unicast traffic on a FDD carrier frequency. If the user wants to receive at the same time a broadcast service, the UE will activate its IMB receptor for receiving broadcast traffic on the allocated TDD carrier frequency. This may result in a RF co-existence issue, depending on the network planning of the operator, if the UE radio-frequency receivers are not performing well enough to render the UE insensitive to a RF co-existence issue between the allocated TDD carrier frequency on which the broadcast traffic is transmitted and the FDD carrier frequency on which the UE is receiving (respectively transmitting) the unicast traffic. Such a RF co-existence issue may then prevent or severely adversely impact the reception of the broadcast traffic or the communication of the unicast traffic between the UE and the FDD network infrastructure. For instance, the UE may simply not receive correctly the broadcast traffic flow, resulting in the user not being able to use the broadcast service which she/he has requested. The UE may then, at its own initiative, send a message informing the network of a RF co-existence issue. Upon receiving this message, the infrastructure network may or may not take action. If it does, it can reconfigure the connection, and trigger an inter-frequency handover to transfer the current unicast communication to a FDD carrier frequency different from the conflicting one. This will remove the cause of a strong impairment on reception of broadcast traffic.

The detection of a potential or actual RF co-existence issue does not necessarily require the failure of the setting up of a communication, be it in unicast mode or broadcast mode, as will be illustrated in the following example: In a situation wherein the UE is receiving (or transmitting) unicast traffic on a FDD carrier frequency, the UE user may want to receive at the same time a broadcast service. Once the carrier frequency on which the requested TDD broadcast service is known from the UE, the UE will run the carrier frequencies for the FDD unicast service and the TDD broadcast service through a RF co-existence detection algorithm. This algorithm will compare the distances between the respective TDD broadcast and FDD unicast carrier frequencies, with predefined threshold(s) in a look-up table which will have been built to reflect the radio-frequency performances of the UE with regard to the RF co-existence issue. Therefore, such a RF co-existence detection algorithm can help detecting potential RF co-existence issues between two given carrier frequencies, and a fortiori between a given TDD broadcast carrier frequency and a given FDD unicast carrier frequency. The UE may then, at its own initiative, send a message informing the network of a potential RF co-existence issue. Upon receiving this message, the infrastructure network may or may not take action. If it does, it can reconfigure the connection, and trigger an inter-frequency handover to transfer the current unicast communication to a FDD carrier frequency different from the potentially conflicting one. Note that the above-mentioned distance between carrier frequencies can involve the distance between the carrier frequencies themselves or for example the distance between the upper bound of a first frequency band corresponding to the first carrier frequency and the lower bound of a second frequency band corresponding to the second carrier frequency under consideration.

Another situation is the one where the UE is in mobility. In such a situation wherein the UE moves from one cell to another while exchanging unicast traffic with the FDD network infrastructure, its mobility will trigger handover procedures at the FDD network infrastructure level. If during its mobility the UE sends a request to receive a broadcast service it may, together with or in addition to the request, provide information identifying the TDD carrier frequency on which it is to receive the broadcast service, so that the FDD infrastructure network may manage the handover procedures accordingly. For instance, the FDD infrastructure may refrain from completing a handover to a FDD carrier frequency which conflicts with the TDD carrier frequency identified by the UE, or in contrary decide to accelerate the completion of a handover to a non-conflicting FDD carrier if the one currently allocated to the unicast traffic of the UE is in conflict with the TDD carrier frequency identified by the UE.

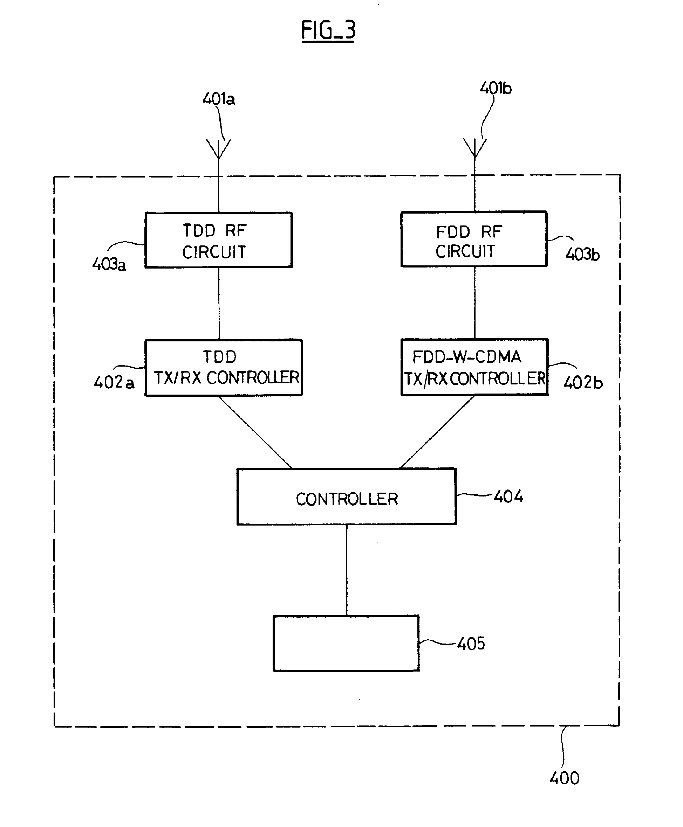

On Figure 3 is shown an example functional architecture of a dual-mode IMB/FDD-WCDMA user equipment 400. Cellular phones, personal digital assistants (PDAs), pagers, mobile phones, laptop equipped with WiFi or WiMAX or WCDMA wireless cards are example of user equipments. User equipment is capable of handling communications in unicast FDD-WCDMA mode as well as IMB services. Note that this example is non-limiting as communications in unicast mode may be using a 2G radio access infrastructure network, a 3G radio access infrastructure network (such as the UTRAN shown on Figure 2), or a 4G network (such as, for example, the Long Term Evolution (LTE) radio access network, called eUTRA). User equipment 400 comprises a first transmit/receive module/controller 402a, coupled with a first radio-frequency (RF) circuit 403a which is itself coupled with first antenna means 401a, for receiving and processing IMB broadcast flows. Also shown on figure 3 are a second transmit/receive module/controller 402b, coupled with a second RF circuit 403b itself coupled with second antenna means 401 b, for communicating in unicast mode with a radio access infrastructure network, for example according to the air interface specifications of the UMTS system in FDD mode. Two sets of antenna means 401 a, 401 b, RF circuits 403a, 403b and transmit/receive modules/controllers 402a, 402b are used so as to have one set dedicated to and operating according to the IMB technology, with the other set being dedicated to and operating according to the WCDMA FDD technology, for the purpose of allowing simultaneous use of WCDMA services and IMB services. It will be understood that while figure 3 shows a functional architecture with those two separate sets of RF circuits and transmit/receive modules/controllers, they may be implemented in separate circuits and chipsets or in a single circuit and/or single chipset. That is, a multi-mode IMB/WCDMA RF circuit and/or a multi-mode IMBNVCDMA chipset may be incorporated in the user equipment 400, instead of separate circuitry for each mode.

The receive section of the TDD Transmit/Receive controller 402a is activated by the central controller 404 whenever the user of the user equipment 400 request reception of an IMB broadcast flow through the man-machine interface module 405.

Before doing so, according to one embodiment, if the UE 400 is already involved in a communication in unicast mode through the Transmit/Receive controller 402b, RF circuit 403b and antenna means 401 b, the central controller 404 will execute an RF co-existence issue detection algorithm by comparing the distance between the TDD frequency carrier of the requested IMB broadcast flow and the FDD frequency carriers used by the ongoing unicast communication with a threshold which is kept in memory module 406.

According to another embodiment, the user of the UE 400 may request initiation of a communication in unicast mode once the UE 400 is already involved in a communication in broadcast mode through the transmit/receive controller 402a. A similar situation is the one where the unicast communication is not requested by the UE 400 but is received from the radio access network by the UE 400. In such cases, if a RF co-existence issue with the requested unicast communication results in the reception quality of the broadcast flow being deteriorated, the TDD transmit/receive controller 402a will detect such deterioration, and will inform the central controller 404 of such deterioration. The central controller 404 will in turn generate a specific RF co-existence issue message containing information regarding the RF co-existence issue between the FDD carrier frequencies of the unicast communication and the TDD carrier frequency of the broadcast service. The message will then be transmitted to the radio access network with which the UE 400 is in communication, preferably via the FDD transmit/receive chain 402b, 403b and 401 b. As an alternative, it will insert such information in a feedback message to be transmitted to the radio access network with which the UE 400 is in communication.

According to yet another embodiment, the central controller 404 will send a request to the TDD Transmit/Receive controller 402a and will expect in response to receive the data flow of the requested IMB Broadcast flow. In lack of such a response, or upon receipt of a response from the TDD Transmit/Receive controller 402a that the reception quality of the requested broadcast flow is severely impaired, the central controller 404 will generate a specific RF co-existence issue message containing information regarding the RF co-existence issue between the FDD carrier frequencies of the unicast communication and the TDD carrier frequency of the requested broadcast service. The message will then be transmitted to the radio access network with which the UE 400 is in communication, preferably via the FDD transmit/receive chain 402b, 403b and 401 b. As an alternative, it will insert such information in a feedback message to be transmitted to the radio access network with which the UE 400 is in communication.

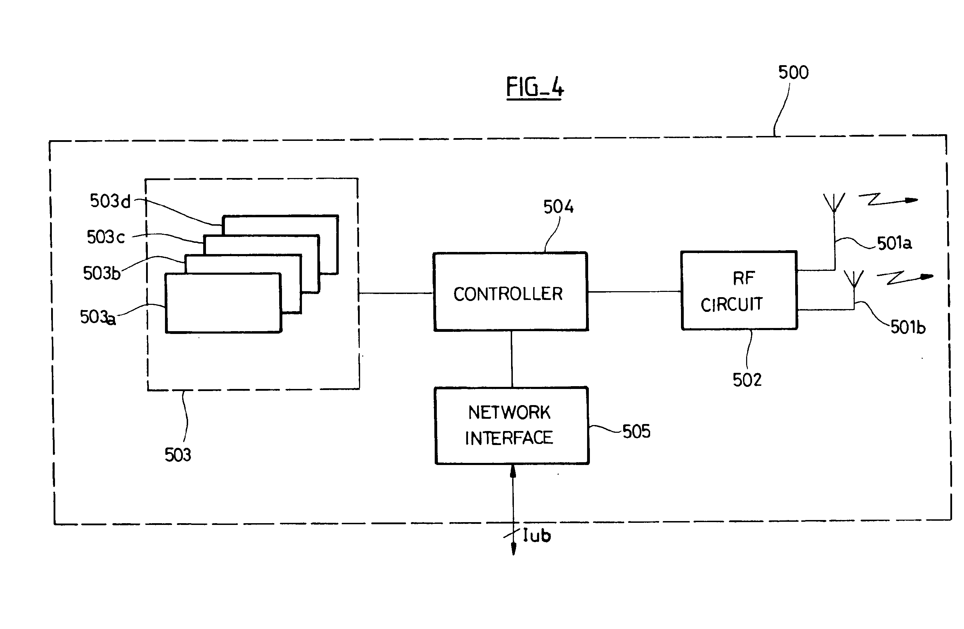

Shown on Figure 4 is an exemplary functional architecture of a Node-B 500. The baseband processing section 503 comprises a bank of processing modules 503a-503d which handle ISO layers 1-3 processing on communication channels (including coding and multiplexing of transport channels into physical channels, channelization and scrambling in the downlink, and unscrambling, unspreading, demultiplexing and decoding in the uplink). The radio-frequency circuit module 502 performs radio-frequency processing such as shaping of signals coming from the baseband processing section 503, frequency transposition and other radio processing that are required form transmitting signals over the antenna means 501a-501b. The Node-B also includes an interface module 505 which provides interfacing with the RNC that supervises the Node-B 500, in compliance with the luB interface specification. A controller 504 manages the data flows between the different sections 503 (baseband processing), 505 (interfacing) and 502 (RF), as well as all processing tasks carried out in the different sections, and in particular in the baseband processing modules 503a-503d. In this exemplary embodiment, the processing modules 503a-503d are each adapted to receive and process information regarding a radio-frequency co-existence issue received from a UE, and inform the controller 504. The controller 504 is adapted to trigger at the RF circuit 502 a RF reconfiguration of a pending FDD mode (for instance HSDPA) communication in order to shift the communication to a different carrier frequency.

The following provides several exemplary manners in which the UE can send the feedback information regarding the actual or potential occurrence of a radio-frequency co-existence issue to the network. Such information may for example be carried in a new and specific message according to the RRC protocol described above. It may also be carried in an existing RRC protocol message, such as those related to the connection setup procedure (e.g. the RRC connection request message, or the RRC connection setup complete message).

The transmitted information can comprise an indication of an RF co-existence issue, alone or together with identification of the related conflicting channel frequencies. It can be carried in an information element (IE) to be included as indicated above in a new or already existing message according to the RRC protocol.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements although not explicitly described or shown herein. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the FIGs. 3 and 4, including any functional blocks labelled as "processors" or "controller", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

## Claims

1. A method for enhancing the use of radio resource allocated to data communication between user equipments (1a;1b;1c) and a radio access network infrastructure (2), wherein the radio access network (2) comprises at least a base station (4;5;6) and is adapted for operating in first and second frequency bands for providing respective first and second services to user equipments (1a;1b;1c), the method comprising the steps of, with regard to a user equipment (1a;1b;1c) adapted for using simultaneously said first and second services:
- detecting an actual or potential occurrence of a radio-frequency co-existence issue between the radio transmissions for said first and second services at the user equipment (1a;1b;1c), wherein said first service is provided in unicast mode on paired spectrum, and said second service is provided in broadcast mode on unpaired spectrum, wherein the detecting of the actual or potential occurrence of a radio-frequency co-existence issue between the radio transmissions for said first and second services includes a step of comparing a distance between said first and second frequency bands with a predefined threshold reflecting a radio-frequency performance of the user equipment (1a;1b;1c) with regard to the actual or potential occurrence of a radio-frequency co-existence issue;
- transmitting information regarding the detected radio-frequency co-existence issue by the user equipment (1a;1b;1c); and
- being triggered a reconfiguration of a pending communication to switch it to a different carrier frequency by the radio access network infrastructure (2).

2. A method according to claim 1, wherein said first and second services are provided on different radio duplex technologies in respective first and second frequency bands.

3. A method according to one of claims 1 or 2, wherein the step of detecting an actual or potential occurrence of a radio-frequency co-existence issue between the radio transmissions for said first and second services includes, with regard to a user equipment (1a;1b;1c) which is using the first service, includes a step of detecting a deterioration of radio reception quality of the first service.

4. A method according to any one of claims 1 to 3, wherein the step of detecting an actual or potential occurrence of a radio-frequency co-existence issue between the radio transmissions for said first and second services includes, with regard to a user equipment (1a;1b;1c) which is using the first service, the steps of:
- initiating the use of the second service concurrently with the use of the first service;
- detecting that the use of the second service concurrently with the use of the first service is either impossible or severely impaired.

5. User equipment module (400) for enhancing the use of radio resource allocated to data communication between user equipments (1a;1b;1c) and a radio access network infrastructure (2) comprising at least a base station (4;5;6) and adapted for operating in first and second frequency bands for providing respective first and second services to user equipments (1a;1b;1c), the user equipment module (400) comprising controller means (404), radio-frequency circuit means (403a;403b) and antenna means (401a;401b), wherein with regard to a user equipment adapted for using simultaneously said first and second services, the controller means (404) are adapted for:
- detecting an actual or potential occurrence of a radio-frequency co-existence issue between the radio transmissions for said first and second services, wherein said first service is provided in unicast mode on paired spectrum, and said second service is provided in broadcast mode on unpaired spectrum, wherein the detecting of the actual or potential occurrence of a radio-frequency co-existence issue between the radio transmissions for said first and second services includes a step of comparing a distance between said first and second frequency bands with a predefined threshold reflecting a radio-frequency performance of the user equipment (1a;1b;1c) with regard to the actual or potential occurrence of a radio-frequency co-existence issue;
- generating information regarding the detected radio-frequency co-existence issue, and transmitting said information to the radio access network infrastructure (2); and
- being triggered a reconfiguration of a pending communication to switch it to a different carrier frequency by the radio access network infrastructure (2).

6. User equipment module (400) according to claim 5, wherein the controller means (404) are coupled with memory means, and are further adapted for detecting the actual or potential occurrence of a radio-frequency co-existence issue by fetching from the memory means the predefined radio-frequency co-existence threshold, and comparing the distance between said first and second frequency bands with the threshold.

7. User equipment module (400) according to claim 5, wherein the controller means (404) are further adapted for, when the user equipment (1a;1b;1c) is using the first service, detecting a deterioration of radio reception quality for the first service.

8. User equipment module (400) according to claim 5 to 7, wherein the controller means are further adapted for, when the user equipment is using the first service:
- operating the radio-frequency circuit means and antenna means for initiating the use of the second service concurrently with the use of the first service, and
- detecting that the use of the second service concurrently with the use of the first service is either impossible or severely impaired.

9. User equipment (1a;1b;1c) comprising a user equipment module (400) according to any one of claims 5 to 8.

10. Base station equipment (4;5;6;500) of a radio access network (2) adapted for operating in first and second frequency bands for providing respective first and second services to user equipments (1a;1b;1c), wherein said first service is provided in unicast mode on paired spectrum, and said second service is provided in broadcast mode on unpaired spectrum, comprising a digital processing module (503), a radio-frequency processing module (502), and a controller module (504), wherein with regard to a user equipment adapted for using simultaneously said first and second services, the digital processing module (503) is adapted for receiving and processing information regarding a radio-frequency co-existence issue received from a user equipment (1a;1b;1c), wherein a detecting of the radio-frequency co-existence issue between the radio transmissions for said first and second services includes a step of comparing a distance between said first and second frequency bands with a predefined threshold reflecting a radio-frequency performance of the user equipment (1a;1b;1c) with regard to the occurrence of a radio-frequency co-existence issue, and transmitting such information to the controller module (504), wherein the controller module (504) is further adapted for, upon reception of information regarding a radio-frequency co-existence issue for a user equipment (1a;1b;1c) with which a communication is pending, triggering from the radio-frequency processing module a reconfiguration of the pending communication to switch it to a different carrier frequency.

11. A computer program product which can be loaded on a memory coupled with a processor, and comprising computer instructions for implementing the method according to any of the claims 1 to 4 when loaded and run by the processor.

12. A machine readable medium that contains computer executable instructions for performing a method according to any of the claims 1 to 4 when run on a computer.

## Patentansprüche

1. Verfahren zur Verbesserung einer dem Datenverkehr zwischen Teilnehmergeräten (1 a;1 b;1 c) und einer Funkzugangsnetzwerks-Infrastruktur (2) zugewiesenen Funkressource, wobei das Funkzugangsnetzwerk (2) mindestens eine Basisstation (4;5;6) umfasst und ausgelegt ist für den Betrieb in einem ersten und einem zweiten Frequenzband für das entsprechende Erbringen von ersten und zweiten Diensten für die Teilnehmergeräte (1 a;1 b;1 c), wobei das Verfahren hinsichtlich eines für die simultane Nutzung besagten ersten und zweiten Dienstes ausgelegten Teilnehmergerätes (1 a; 1 b; 1 c) die folgenden Schritte umfasst:
- Feststellen eines tatsächlichen oder potentiellen Auftretens eines Fehlers gleichzeitig bestehender Funkfrequenzen zwischen den Funkübertragungen für besagten ersten und zweiten Dienst am Teilnehmergerät (1 a;1 b;1 c), wobei besagter erster Dienst im Unicast-Modus auf einem gepaarten Frequenzbereich und besagter zweiter Dienst im Broadcast-Modus auf einem ungepaarten Frequenzbereich erfolgt, wobei das Feststellen eines tatsächlichen oder potentiellen Auftretens eines Fehlers gleichzeitig bestehender Funkfrequenzen zwischen den Funkübertragungen für besagten ersten und zweiten Dienst einen Schritt des Vergleichens eines Abstands zwischen besagtem erstem Frequenzband mit einem vordefinierten Grenzwert umfasst, ein Leistungsverhalten des Teilnehmergerätes (1a;1b;1c) bezüglich des tatsächlichen oder potentiellen Auftretens eines Fehlers gleichzeitig bestehender Funkfrequenzen zum Ausdruck bringend;
- Übermitteln von Informationen zum festgestellten Fehler gleichzeitig bestehender Funkfrequenzen durch das Teilnehmergerät (1 a; 1 b; 1 c); und
- das daraufhin erfolgende Auslösen einer Rekonfiguration einer bestehenden Kommunikationsverbindung, um diese durch die Funkzugangsnetz-Infrastruktur (2) auf eine andere Trägerfrequenz umzuschalten.

2. Verfahren nach Anspruch 1, wobei besagter erster und zweiter Dienst über verschiedene Funk-Duplextechnologien mit einem ersten und einem zweiten Frequenzband zur Verfügung gestellt werden.

3. Verfahren nach einem jeglichen der Ansprüche 1 oder 2, wobei der Schritt des Feststellens eines tatsächlichen oder potentiellen Auftretens eines Fehlers gleichzeitig bestehender Funkfrequenzen zwischen den Funkübertragungen für besagten ersten und zweiten Dienst hinsichtlich des den ersten Dienst in Anspruch nehmenden Teilnehmergeräts (1 a;1 b;1 c) einen Schritt des Feststellens einer Verschlechterung der Funkempfangsqualität beim ersten Dienst umfasst.

4. Verfahren nach einem jeglichen der Ansprüche 1 bis 3, wobei der Schritt des Feststellens eines tatsächlichen oder potentiellen Auftretens eines Fehlers gleichzeitig bestehender Funkfrequenzen zwischen den Funkübertragungen für besagten ersten und zweiten Dienst hinsichtlich des den ersten Dienst in Anspruch nehmenden Teilnehmergeräts (1 a; 1 b; 1 c) folgende Schritte umfasst:
- Einleiten der Benutzung des zweiten Dienstes gleichzeitig mit der Benutzung des ersten Dienstes;
- Feststellen, dass die Benutzung des zweiten Dienstes gleichzeitig mit der Benutzung des ersten Dienstes entweder unmöglich oder beträchtlich gestört ist;

5. Teilnehmergerätmodul (400) für die Verbesserung der Nutzung der Funkressourcen, welche der Kommunikation zwischen den Teilnehmergeräten (1 a;1 b;1 c) und der Funkzugangsnetz-Infrastruktur (2) zugewiesen sind, die mindestens eine Basisstation (4;5;6) umfasst und ausgelegt ist für den Betrieb in einem ersten und einem zweiten Frequenzband zur Bereitstellung besagten ersten und zweiten Dienstes für die Teilnehmergeräte (1 a;1 b;1 c), wobei das Teilnehmergerätmodul (400) Steuerungsmittel (404), Mittel für einen Funkfrequenzschaltkreis (403a; 403b) und Antennenmittel (401 a; 401 b) umfasst, wobei hinsichtlich eines für die simultane Nutzung besagten ersten und zweiten Dienstes ausgelegten Teilnehmergeräts
die Steuerungsmittel (404) ausgelegt sind für:
- das Feststellen eines tatsächlichen oder potentiellen Auftretens eines Fehlers gleichzeitig bestehender Funkfrequenzen zwischen den Funkübertragungen für besagten ersten und zweiten Dienst, wobei besagter erster Dienst im Unicast-Modus auf einem gepaarten Frequenzbereich und besagter zweiter Dienst im Broadcast-Modus auf einem ungepaarten Frequenzbereich erfolgt, wobei das Feststellen eines tatsächlichen oder potentiellen Auftretens eines Fehlers gleichzeitig bestehender Funkfrequenzen zwischen den Funkübertragungen für besagten ersten und zweiten Dienst einen Schritt des Vergleichens eines Abstands zwischen besagtem erstem Frequenzband mit einem vordefinierten Grenzwert umfasst, ein Leistungsverhalten des Teilnehmergerätes (1 a;1 b;1 c) bezüglich des tatsächlichen oder potentiellen Auftretens eines Fehlers gleichzeitig bestehender Funkfrequenzen zum Ausdruck bringend;
- das Generiere von Informationen hinsichtlich des festgestellten Fehlers gleichzeitig bestehender Funkfrequenzen und das Übermitteln besagter Informationen an die Funkzugangsnetz-Infrastruktur (2); und
- das daraufhin erfolgende Auslösen einer Rekonfiguration einer bestehenden Kommunikationsverbindung, um diese durch die Funkzugangsnetz-Infrastruktur (2) auf eine andere Trägerfrequenz umzuschalten.

6. Teilnehmergerätmodul (400) nach Anspruch 5, wobei die Steuerungsmittel (404) gekoppelt sind an Speichermittel und weiterhin ausgelegt sind für das Feststellen des tatsächlichen oder potentiellen Auftretens eines Fehlers gleichzeitig bestehender Funkfrequenzen, indem sie von den Speichermitteln die vordefinierten Grenzwerte für gleichzeitig bestehende Funkfrequenzen abrufen und den Abstand zwischen besagtem erstem und besagtem zweitem Frequenzband mit dem Grenzwert vergleichen.

7. Teilnehmergerätmodul (400) nach Anspruch 5, wobei die Steuerungsmittel (404) weiterhin ausgelegt dafür sind, um dann, wenn das Teilnehmergerät (1a;1b;1c) den ersten Dienst nutzt, eine Verschlechterung der Funkempfangsqualität für den ersten Dienst festzustellen.

8. Teilnehmergerätmodul (400) nach den Ansprüchen 5 bis 7, wobei die Steuerungsmittel weiterhin ausgelegt sind, um bei der Benutzung des ersten Dienstes durch das Teilnehmergerät Folgendes zu leisten:
- Betreiben der Funkfrequenzschaltkreismittel und der Antennenmittel für das Einleiten der Nutzung des zweiten Dienstes zeitgleich mit der Nutzung des ersten Dienstes und
- Feststellen, dass die Benutzung des zweiten Dienstes gleichzeitig mit der Benutzung des ersten Dienstes entweder unmöglich oder beträchtlich gestört ist;

9. Teilnehmergerät (1 a; 1 b; 1 c), ein Teilnehmergerätmodul (400) nach einem jeglichen der Ansprüche 5 bis 8 umfassend.

10. Basisstation-Einrichtung (4;5;6;500) eines Funkzugangsnetzwerks (2), ausgelegt für den Betrieb in ersten und zweiten Frequenzbändern für das Zurverfügungstellen entsprechender erster und zweiter Dienste für die Teilnehmergeräte (1a;1b;1c), wobei besagter erster Dienst im Unicast-Modus auf der Grundlage eines gepaarten Frequenzbereichs und besagter zweiter Dienst im Broadcast-Modus auf der Grundlage eines ungepaarten Frequenzbereichs zur Verfügung gestellt wird, ein digitales Verarbeitungsmodul (503), ein Funkfrequenz-Verarbeitungsmodul (502) und ein Steuerungsmodul (504) umfassend, wobei hinsichtlich des für die simultane Nutzung besagten ersten und besagen zweiten Dienstes ausgelegten Teilnehmergeräts das digitale Verarbeitungsmodul (503) ausgelegt ist für den Empfang und die Verarbeitung von Informationen zur Meldung eines Fehlers gleichzeitig bestehender Funkfrequenzen durch ein Teilnehmergerät (1a;1b;1c), wobei ein Feststellen eines Fehlers gleichzeitig bestehender Funkfrequenzen zwischen den Funkübertragungen für besagten ersten und zweiten Dienst einen Schritt des Vergleichens eines Abstands zwischen besagtem erstem und besagtem zweitem Frequenzband mit einem vordefinierten Grenzwert umfasst, was eine Bewertung der Funkfrequenzleistung des Teilnehmergerätes (1 a;1 b;1 c) hinsichtlich des Auftretens eines Fehlers gleichzeitig bestehender Funkfrequenzen widerspiegelt, sowie das Übermitteln von solcherlei Informationen an das Steuerungsmodul (504), wobei das Steuerungsmodul (504) weiterhin dafür ausgelegt ist, um auf den Empfang von Informationen zu einem Fehler gleichzeitig bestehender Funkfrequenzen für ein Teilnehmergerät (1a;1b;1c) mit bestehender Kommunikationsverbindung hin vom Funkfrequenz-Verarbeitungsmodul aus eine Rekonfiguration der bestehenden Kommunikationsverbindung auszulösen und auf eine andere Trägerfrequenz umzuschalten.

11. Computerprogramm-Produkt, welches sich auf ein mit einem Prozessor gekoppeltes Speichermedium laden lässt und welches Computeranweisungen für das Implementieren eines Verfahrens nach einem jeglichen der Ansprüche 1 bis 4 umfasst, wenn es geladen und von einem Prozessor ausgeführt wird.

12. Ein computerlesbares Medium, das computerausführbare Befehle für das Ausführen eines Verfahrens nach einem jeglichen der Ansprüche 1 bis 4 umfasst, wenn es auf einem Computer ausgeführt wird.

## Revendications

1. Procédé permettant d'améliorer l'utilisation d'une ressource radio attribuée à une communication de données entre des équipements utilisateurs (1a ; 1 b ; 1 c) et une infrastructure de réseau d'accès radio (2), dans lequel le réseau d'accès radio (2) comprend au moins une station de base (4 ; 5 ; 6) et est adapté pour fonctionner dans des première et deuxième bandes de fréquence pour fournir des premier et deuxième services respectifs à des équipements utilisateurs (1a; 1b; 1 c), le procédé comprenant les étapes suivantes, en ce qui concerne un équipement utilisateur (1a; 1 b ; 1 c) adapté pour utiliser simultanément lesdits premier et deuxième services :
- détecter une occurrence réelle ou potentielle d'un problème de coexistence de radiofréquence entre les émissions radio pour lesdits premier et deuxième services au niveau de l'équipement utilisateur (1 a ; 1 b ; 1 c), dans lequel ledit premier service est fourni en mode de monodiffusion sur un spectre apparié, et ledit deuxième service est fourni en mode de diffusion sur un spectre non apparié, dans lequel la détection de l'occurrence réelle ou potentielle d'un problème de coexistence de radiofréquence entre les émissions radio pour lesdits premier et deuxième services comprend une étape de comparaison d'une distance entre lesdites première et deuxième bandes de fréquence à un seuil prédéfini reflétant une performance radiofréquence de l'équipement utilisateur (1a; 1b; 1 c) en ce qui concerne l'occurrence réelle ou potentielle d'un problème de coexistence de radiofréquence ;
- transmettre des informations concernant le problème de coexistence de radiofréquence détecté au moyen de l'équipement utilisateur (1 a ; 1 b ; 1 c) ; et
- déclencher une reconfiguration d'une communication en attente pour la faire commuter vers une fréquence porteuse différente au moyen de l'infrastructure de réseau d'accès radio (2).

2. Procédé selon la revendication 1, dans lequel lesdits premier et deuxième services sont fournis sur des technologies de duplexage radio différentes dans des première et deuxième bandes de fréquence respectives.

3. Procédé selon l'une des revendications 1 et 2, dans lequel l'étape de détection d'une occurrence réelle ou potentielle d'un problème de coexistence de radiofréquence entre les émissions radio pour lesdits premier et deuxième services comprend, en ce qui concerne un équipement utilisateur (1a ; 1b ; 1 c) qui utilise le premier service, une étape de détection d'une détérioration d'une qualité de réception radio du premier service.

4. Procédé selon l'une quelconque des revendications 1 à 3, dans lequel l'étape de détection d'une occurrence réelle ou potentielle d'un problème de coexistence de radiofréquence entre les émissions radio pour lesdits premier et deuxième services comprend, en ce qui concerne un équipement utilisateur (1 a ; 1b ; 1 c) qui utilise le premier service, les étapes suivantes :
- initier l'utilisation du deuxième service simultanément à l'utilisation du premier service ;
- détecter que l'utilisation du deuxième service simultanément à l'utilisation du premier service est impossible ou fortement altérée.

5. Module d'équipement utilisateur (400) permettant d'améliorer l'utilisation d'une ressource radio attribuée à une communication de données entre des équipements utilisateurs (1a ; 1b ; 1 c) et une infrastructure de réseau d'accès radio (2) comprenant au moins une station de base (4 ; 5 ; 6) et adapté pour fonctionner dans des première et deuxième bandes de fréquence pour fournir des premier et deuxième services respectifs à des équipements utilisateurs (1 a ; 1 b ; 1 c), le module d'équipement utilisateur (400) comprenant des moyens de contrôle (404), des moyens de circuit de radiofréquence (403a ; 403b) et des moyens d'antenne (401a ; 401 b), dans lequel, en ce qui concerne un équipement utilisateur adapté pour utiliser simultanément lesdits premier et deuxième services, les moyens de contrôle (404) sont adaptés pour :
- détecter une occurrence réelle ou potentielle d'un problème de coexistence de radiofréquence entre les émissions radio pour lesdits premier et deuxième services, dans lequel ledit premier service est fourni en mode de monodiffusion sur un spectre apparié, et ledit deuxième service est fourni en mode de diffusion sur un spectre non apparié, dans lequel la détection de l'occurrence réelle ou potentielle d'un problème de coexistence de radiofréquence entre les émissions radio pour lesdits premier et deuxième services comprend une étape de comparaison d'une distance entre lesdites première et deuxième bandes de fréquence à un seuil prédéfini reflétant une performance radiofréquence de l'équipement utilisateur (1a ; 1b ; 1c) en ce qui concerne l'occurrence réelle ou potentielle d'un problème de coexistence de radiofréquence ;
- générer des informations concernant le problème de coexistence de radiofréquence détecté, et transmettre lesdites informations à l'infrastructure de réseau d'accès radio (2) ; et
- déclencher une reconfiguration d'une communication en attente pour la faire commuter vers une fréquence porteuse différente au moyen de l'infrastructure de réseau d'accès radio (2).

6. Module d'équipement utilisateur (400) selon la revendication 5, dans lequel les moyens de contrôle (404) sont couplés aux moyens de mémoire, et sont en outre adaptés pour détecter l'occurrence réelle ou potentielle d'un problème de coexistence de radiofréquence en récupérant à partir des moyens de mémoire le seuil de coexistence de radiofréquence prédéfini, et pour comparer la distance entre lesdites première et deuxième bandes de fréquence au seuil.

7. Module d'équipement utilisateur (400) selon la revendication 5, dans lequel les moyens de contrôle (404) sont en outre adaptés, lorsque l'équipement utilisateur (1 a ; 1 b ; 1 c) utilise le premier service, pour détecter une détérioration d'une qualité de réception radio du premier service.

8. Module d'équipement utilisateur (400) selon la revendication 5 ou 7, dans lequel les moyens de contrôle sont en outre adaptés, lorsque l'équipement utilisateur utilise le premier service :
- pour faire fonctionner les moyens de circuit de radiofréquence et les moyens d'antenne pour initier l'utilisation du deuxième service simultanément à l'utilisation du premier service, et
- pour détecter que l'utilisation du deuxième service simultanément à l'utilisation du premier service est impossible ou fortement altérée.

9. Équipement utilisateur (1a ; 1b ; 1c) comprenant un module d'équipement utilisateur (400) selon l'une quelconque des revendications 5 à 8.

10. Équipement de station de base (4 ; 5 ; 6 ; 500) d'un réseau d'accès radio (2) adapté pour fonctionner dans des première et deuxième bandes de fréquence pour fournir des premier et deuxième services respectifs à des équipements utilisateurs (1 a ; 1 b ; 1 c), dans lequel ledit premier service est fourni en mode de monodiffusion sur un spectre apparié, et ledit deuxième service est fourni en mode de diffusion sur un spectre non apparié, comprenant un module de traitement numérique (503), un module de traitement radiofréquence (502), et un module de contrôle (504), dans lequel, en ce qui concerne un équipement utilisateur adapté pour utiliser simultanément lesdits premier et deuxième services, le module de traitement numérique (503) est adapté pour recevoir et traiter des informations concernant un problème de coexistence de radiofréquence provenant d'un équipement utilisateur (1a; 1b; 1 c), dans lequel une détection du problème de coexistence de radiofréquence entre les émissions radio pour lesdits premier et deuxième services comprend une étape de comparaison d'une distance entre lesdites première et deuxième bandes de fréquence à un seuil prédéfini reflétant une performance radiofréquence de l'équipement utilisateur (1a; 1b; 1 c) en ce qui concerne l'occurrence d'un problème de coexistence de radiofréquence, et de transmission de ces informations au module de contrôle (504), dans lequel le module de contrôle (504) est en outre adapté, lors de la réception d'informations concernant un problème de coexistence de radiofréquence pour un équipement utilisateur (1 a ; 1 b ; 1c) avec lequel une communication est en attente, pour déclencher à partir du module de traitement radiofréquence une reconfiguration de la communication en attente pour la faire commuter vers une fréquence porteuse différente.

11. Produit de programme informatique qui peut être chargé sur une mémoire couplée à un processeur, et comprenant des instructions informatiques pour mettre en oeuvre le procédé selon l'une quelconque des revendications 1 à 4 lorsqu'elles sont chargées et exécutées par le processeur.

12. Support lisible par une machine qui contient des instructions exécutables par un ordinateur pour exécuter un procédé selon l'une quelconque des revendications 1 à 4 lorsqu'elles sont exécutées sur un ordinateur.
